# EUROPÄISCHE PATENTANMELDUNG

(11) **EP 4 491 470 A1**
(43) Veröffentlichungstag der Anmeldung: **15.01.2025**
(21) Anmeldenummer: 24183874.7
(22) Anmeldetag: 24.06.2024
(51) Int. Cl.: B60T 13/68, B60T 13/12, B60T 8/171, B60T 8/18

(54) **MOBILE ARBEITSMASCHINE MIT EINER BREMSEINHEIT**

(30) Priorität: 11.07.2023 DE 102023118340
(71) Anmelder: Wacker Neuson Linz GmbH, 4063 Hörsching (AT)
(72) Erfinder: Mothes, Martin, 4661 Roitham (AT)
(74) Vertreter: Otten, Roth, Dobler & Partner mbB Patentanwälte

(57) **Zusammenfassung**

Es wird eine mobile Arbeitsmaschine (1) mit einem Fahrzeugrahmen (2) und mit einer Antriebseinheit zum Antreiben wenigstens eines um eine Antriebsachse drehbaren Antriebslaufrades (4), wobei wenigstens ein Arbeitswerkzeug (3), wie z.B. eine Mulde (3) oder dergleichen, und/oder eine Werkzeughaltevorrichtung zum Halten des Arbeitswerkzeugs (3) vorgesehen ist, wobei wenigstens eine zumindest ein Bremselement aufweisende Bremseinheit zum Bremsen des wenigstens einen Antriebslaufrades (4) vorgesehen ist, wobei die Bremseinheit als wenigstens eine Bremsflüssigkeit umfassende Hydraulik-Bremseinheit ausgebildet ist, wobei wenigstens ein Bremspedal zum manuellen Betätigen von einer Bedienperson und zum Druckbeaufschlagen der Bremsflüssigkeit vorgesehen ist, wobei die Bremseinheit wenigstens ein Druckbegrenzungsventil zum Begrenzen eines Maximal-Drucks der Bremsflüssigkeit umfasst, vorgeschlagen, die wenigstens teilweise die Nachteile des Standes der Technik verbessert, insbesondere ein verbessertes und/oder kostengünstiges Bremssystem zu realisieren. Dies wird erfindungsgemäß dadurch erreicht, dass wenigstens ein Bremssensor (9) zum Erfassen eines Bremsparameters vorgesehen ist und dass der Bremssensor als Gewichtskraftsensor zum Erfassen einer Gewichtskraft und/oder Zuladung des Arbeitswerkzeuges (3) oder als Beschleunigungssensor zum Erfassen einer Bremsbeschleunigung der Arbeitsmaschine (1) ausgebildet ist.

## Beschreibung

Die Erfindung betrifft eine mobile Arbeitsmaschine, insbesondere Radlader, Teleskoplader, Bagger, Dumper, Traktor oder dergleichen, mit einem Fahrzeugrahmen und mit einer Antriebseinheit zum Antreiben wenigstens eines um eine Antriebsachse drehbaren Antriebslaufrades, nach dem Oberbegriff des Anspruchs 1.

### Stand der Technik

Mobile Arbeitsmaschine, insbesondere Dumper, Radlader, Teleskoplader, Bagger, Traktor oder dergleichen, mit einem Fahrzeugrahmen und mit einer Antriebseinheit zum Antreiben wenigstens eines Antriebsrades, werden heutzutage meist noch mit einem flüssigen Kraftstoff betrieben. Dabei kommen heute hauptsächlich dieselgetriebene Fahrzeuge zum Einsatz. Zwischenzeitlich sind bereits elektrisch angetriebene Maschinen mit einem aufladbaren Akkumulator bzw. elektrischen Energiespeicher im Einsatz.

Üblicherweise weisen diese mobilen Arbeitsmaschinen lösbar verbindbare Arbeitswerkzeuge auf, z.B. die mittels sog. "Schnellwechslern" bzw. "Wechselplatten" gehalten bzw. gelöst werden. Vielfach sind diese Arbeitswerkzeuge an einer als Hubarm, Teleskoparm oder dergleichen ausgebildeten Werkzeughaltevorrichtung angeordnet. Zum Heben und/oder Senken dieser als auch die zum Teil aktiv antriebbaren Werkzeuge wie Greifschaufel, Kehrbesen etc. werden bei sog. "vollelektrischen" Maschinen diese elektrisch und bei sog. "hybriden" Maschinen werden diese Komponenten mittels einem hydraulischen System betrieben.

Bei Dumpern sind die Arbeitswerkzeuge als Mulde bzw. Wanne ausgebildet, die im Allgemeinen hebbar und senkbar bzw. um eine Drehachse schwenkbar/kippbar sind, insb. mit einem hydraulischen System bzw. der entspr. Werkzeughaltevorrichtung. Die Mulde bzw. Wanne ist vielfach fest montiert, wobei neuere Dumper auch leicht lösbar verbindbare Wechselsysteme für verschiedenen Aufsätze bzw. Arbeitswerkzeuge aufweisen können.

Gerade in der Fahrzeuggattung "Dumper bis 10t Zuladung" sind gewöhnliche Eigenkraftbremssystem, ohne Bremskraftunterstützung, ohne Bremsassistenzsysteme wie ABS oder ESP üblich. Der Grundaufbau besteht meist aus einer Bremseinheit, die z.B. einen Einkreis- oder Mehrkreis-Hauptbremszylinder umfasst, der vom Fahrer durch Fußkraft betätigt wird. Gewöhnlich wird ein Ölvolumen bzw. eine Hydraulikflüssigkeit über Leitungen in einen oder mehrere Bremszylinder in/an der Achse bzw. dem Laufrad geführt. Der/die Bremszylinder drückt durch Ausfahren ein Bremselement bzw. ein Lamellenpacket und/oder Scheibenbremse zusammen. Sobald sich der Spalt zwischen den Bremslamellen oder Bremsscheibe/Belag schließt, baut sich ein Bremsdruck und somit eine Bremsmoment auf, d.h. der Fahrer bremst das Fahrzeug.

Der Bremsdruck ist in etwa proportional zum Bremsmoment und dieses etwa proportional zur Verzögerung bei konstantem Maschinengewicht. Einflüsse von beispielsweise Temperatur, Verschleiß, Reifen, Schlupf etc. sind vorhanden, können jedoch in erster Linie vernachlässigt werden. Da u.a. aufgrund der unterschiedlichen physischen Eigenschaften des Fahrers, die aufgebrachte maximale Kraft auf das Bremspedal zu sehr unterschiedlichen Maximaldrücken im Bremssystem führen kann, wird üblicherweise die maximale Bremskraft durch ein Druckregelventil begrenzt. Dieses Ventil wird auf einen festen Druck eingestellt, der es erlaubt, dass die Maschine im vollbeladenen Zustand die normativ vorgeschriebene Vollverzögerung erreicht.

Da das Bremsmoment bzw. die Bremskraft im Reifen/Bodenkontakt über die Abschneidung des maximalen Bremsdrucks in der Vollverzögerung quasi konstant ist, erhöht sich proportional die Verzögerung mit Reduzierung der Maschinengesamtmasse. Dazu kann in vereinfachter Annahme die Formel "Bremskraft = Maschinengesamtmasse * Verzögerung" herangezogen werden. Das bedeutet, dass in etwa das Verhältnis von Gesamtgewicht zu Leergewicht im gleichen Verhältnis steht wie die aktuelle bzw. tatsächliche Vollverzögerung mit ggf. teilbeladener Mulde zur normativ geforderten Vollverzögerung. Dies führt z.B. bei leerer Maschine bzw. Mulde zu einer deutlich größeren Vollverzögerung z.T. bis in etwa zum Faktor 3. So kann diese sehr starke Vollverzögerung bzw. Bremsung gerade bei kleineren Dumpern oder dergleichen zu Standsicherheitsproblemen führen, d.h. dass diese umkippen. Dies ist in vielerlei Hinsicht von großem Nachteil, z.B. für die Arbeitsmaschine und auch für den Fahrer sowie das Umfeld bzw. die Sicherheit und die Lebensdauer oder Funktionsfähigkeit.

### Aufgabe und Vorteile der Erfindung

Aufgabe der Erfindung ist es demgegenüber, eine mobile Arbeitsmaschine, insbesondere Radlader, Teleskoplader, Bagger, Dumper, Traktor oder dergleichen, vorzuschlagen, die wenigstens teilweise die Nachteile des Standes der Technik verbessert, insbesondere ein verbessertes und/oder kostengünstiges und/oder sicheres Bremssystem zu realisieren.

Diese Aufgabe wird, ausgehend von einer mobilen Arbeitsmaschine der einleitend genannten Art, durch die Merkmale des Anspruchs 1 gelöst. Durch die in den Unteransprüchen genannten Maßnahmen sind vorteilhafte Ausführungen und Weiterbildungen der Erfindung möglich.

Dementsprechend umfasst eine erfindungsgemäße, mobile Arbeitsmaschine einen Fahrzeugrahmen und eine Antriebseinheit zum Antreiben wenigstens eines um eine Antriebsachse drehbaren Antriebslaufrades, wobei wenigstens ein Arbeitswerkzeug, wie z.B. eine Mulde, eine Schaufel, eine Greifschaufel, eine Gabel, ein Kehrbesen, ein Räumschild oder dergleichen, und/oder eine Werkzeughaltevorrichtung zum Halten des Arbeitswerkzeugs vorgesehen ist, wobei wenigstens eine zumindest ein Bremselement aufweisende Bremseinheit zum Bremsen des wenigstens einen Antriebslaufrades vorgesehen ist, wobei die Bremseinheit als wenigstens eine Bremsflüssigkeit umfassende Hydraulik-Bremseinheit ausgebildet ist, wobei wenigstens ein Bremspedal zum manuellen Betätigen von einer Bedienperson und zum Druckbeaufschlagen der Bremsflüssigkeit vorgesehen ist, wobei die Bremseinheit wenigstens ein Druckbegrenzungsventil zum Begrenzen eines Maximal-Drucks der Bremsflüssigkeit umfasst, wobei wenigstens ein Bremssensor zum Erfassen eines Bremsparameters vorgesehen ist und dass der Bremssensor als Gewichtskraftsensor zum Erfassen einer Gewichtskraft und/oder Zuladung des Arbeitswerkzeuges oder als Beschleunigungssensor zum Erfassen einer Bremsbeschleunigung der Arbeitsmaschine ausgebildet ist.

Mit Hilfe eines derartigen Bremssensors kann in vorteilhafter Weise die Beladung bzw. das Beladungsgewicht und/oder das Gesamtgewicht direkt oder indirekt erfasst werden und das Bremsen bzw. der Bremsvorgang an den erfassten, tatsächlichen bzw. relevanten Ist-Bremsparameter angepasst werden. Hierdurch kann Bremsen entscheidend verbessert werden, insb. sowohl bzgl. der Sicherheit als auch bzgl. dem Komfort für den Fahrer.

Vorzugsweise ist der Bremssensor zum Kontrollieren/Steuern/Regeln eines Sensor-Stellgliedes, insbesondere eines Bremsdruckventils, ausgebildet und/oder ist ein Sensorsignal des Bremssensors als Bremssignal der Bremseinheit ausgebildet, wobei insb. die Bremseinheit das Bremsen und/oder den Bremsvorgang in Abhängigkeit des Senorsignals kontrolliert/steuert/regelt. Hiermit kann eine vorteilhafte Anpassung des Bremsens an die Beladung bzw. das Beladungsgewicht/Gesamtgewicht der Arbeitsmaschine realisiert werden.

In einer vorteilhaften Variante der Erfindung ist der Bremssensor als Hydraulik-Bremssensor zum hydraulischen Erfassen des Bremsparameters und/oder hydraulischen Kontrollieren bzw. Steuern/Regeln des Sensor-Stellgliedes ausgebildet. So kann beispielsweise eine hydraulische Gewichts- und/oder Druckerfassung der Beladung bzw. des Arbeitswerkzeuges und/oder der Werkzeughaltevorrichtung vorgesehen werden. Diese kann hydraulisch bzw. mittels einer Hydraulikflüssigkeit, wie Öl etc., an die Bremseinheit und/oder eine hydraulische Kontrolleinheit und schließlich ggf. bis zum Sensor-Stellglied weitergeleitet werden. Dies kann in vorteilhafter Weise zu einer quasi selbsttätigen bzw. eigenständigen und unabhängigen bzw. separaten Hydrauliksteuerung des Bremsens in Abhängigkeit des Bremssensors bzw. dessen hydraulischen Bremssignals verwendet werden. Zum Beispiel wirkt die Hydraulikflüssigkeit bzw. dieses hydraulische Bremssignal auf das Hydraulikbremssystem ein bzw. steht in Wirkverbindung mit der Hydraulik-Bremseinheit. So kann das Bremselement vorteilhaft vom Bremssensor hydraulisch beeinflusst werden.

In einer besonderen Weiterbildung der Erfindung ist der Bremssensor als elektrischer und/oder elektronischer Bremssensor zum elektrischen/elektronischen Erfassen des Bremsparameters und/oder elektrischen/elektronischen Kontrollieren bzw. Steuern/Regeln des Sensor-Stellgliedes ausgebildet. So kann beispielsweise eine elektrische und/oder elektronische Gewichts- und/oder Druckerfassung der Beladung bzw. des Arbeitswerkzeuges und/oder der Werkzeughaltevorrichtung vorgesehen werden. Diese kann elektrisch und/oder elektronisch an die Bremseinheit und/oder eine elektrische und/oder elektronische Kontrolleinheit und schließlich ggf. bis zum Sensor-Stellglied weitergeleitet werden. Dies kann in vorteilhafter Weise zu einer elektrischen und/oder elektronischen Kontrolle bzw. Steuerung des Bremsens in Abhängigkeit des Bremssensors bzw. dessen elektrischen Bremssignals verwendet werden.

Dementsprechend ist wenigstens eine elektrische und/oder elektronische Kontrolleinheit zum elektrischen/elektronischen Kontrollieren/Steuern/Regeln des Sensor-Stellgliedes, insbesondere des Bremsdruckventils, von großem Vorteil.

Vorteilhafterweise sind das Druckbegrenzungsventil und das Sensor-Stellglied hydraulisch in Serie verschaltet/angeordnet. Hiermit kann in vorteilhafter Weise eine Anpassung der maximalen Bremskraft des Bremselementes umgesetzt werden. Beispielsweise reduziert und/oder begrenzt das Sensor-Stellglied zusätzlich/alternativ den Maximal-Druck für das Bremselement und/oder die Bremseinheit. Zum Beispiel begrenzt bzw. schneidet das Sensor-Stellglied den Druck des Druckbegrenzungsventils ab, wenn die gemessene Verzögerung bzw. Beschleunigung zu hoch und/oder die Beladung bzw. das Gewicht zu gering ist. Dies kann einerseits durch ein Schaltventil erreicht werden, dass die hydraulische Verbindung zum Bremselement bzw. zur Bremseinheit, zumindest zeitweise, unterbricht.

Andererseits kann dies durch ein zweites Druckbegrenzungsventil erreicht werden. Das bedeutet u.a., dass z.B. das (erste) Druckbegrenzungsventil einen ersten Maximal-Druck und das Sensor-Stellglied bzw. zweite Druckbegrenzungsventil einen zweiten Maximal-Druck aufweist, wobei in vorteilhafter Weise der erste Maximal-Druck, insb. für das vollbeladene Arbeitswerkzeug/Fahrzeug bzw. für die Volllast ausgelegt bzw. vorgesehen, größer als der zweite Maximal-Druck des Sensor-Stellglieds ist. Hierbei ist der zweite Maximal-Druck des Sensor-Stellglieds in vorteilhafter Weise veränderbar und möglichst an das Sensorsignal bzw. an die tatsächliche Ist-Beladung bzw. das Ist-Gewicht und/oder die Ist-Beschleunigung/- Verzögerung anpassbar. Dies ermöglicht in vorteilhafter Weise eine Anpassung an unterschiedlichste Beladungen bzw. Gewichte und kann ein zu starkes Verzögern/Bremsen bei beladenem Werkzeug/Fahrzeug wirkungsvoll verhindern.

Es ist auch denkbar, dass in einer besonders kostengünstigen Variante mit geringerem (steuerungstechnischen) Aufwand es durchaus ausreichend sein kann, dass z.B. der zweite Maximal-Druck des Sensor-Stellglieds fest bzw. nicht-veränderbar ist und/oder etwa die Hälfte oder etwa ein Drittel des ersten Maximal-Drucks des (ersten) Druckbegrenzungsventils ist. Dies bedeutet, dass insb. bei nicht vollbeladenem und/oder halbbeladenem oder (fast) leerem Arbeitswerkzeug, d.h. Letzteres bedeutet bei Leergewicht, das Sensor-Stellglied bzw. zweite Druckbegrenzungsventil derart geschaltet wird, dass der zweite Maximal-Druck die Bremsung/Verzögerung bestimmt bzw. die Bremseinheit kontrolliert/steuert/regelt. Hierbei kann in vorteilhafter Weise eine stufenweise sowie sichere und/oder bessere Bremsverzögerung sowohl bei Leergewicht als auch bei Volllast bzw. maximaler Beladung erreicht werden, wobei der steuerungstechnische Aufwand und die Kosten relativ klein sein können.

Alternativ hierzu kann das Druckbegrenzungsventil und das Sensor-Stellglied hydraulisch parallel verschaltet/angeordnet werden. Vorzugsweise wird mit dem Druckbegrenzungsventil ein Maximal-Druck eingestellt/festgelegt, der für alle Beladungsfälle bzw. -zustände, d.h. von leeres bis voll beladenes Arbeitswerkzeug/Fahrzeug, eine sichere bzw. rechtlich korrekte Bremsung ermöglicht. Dies kann auch im Fehlerfall und/oder voll beladenem Arbeitswerkzeug/Fahrzeug eine ausreichende Hilfs-/Bremsung gewährleisten. Hierbei erfolgt die Verzögerung/Bremsung mit dem eingestellten bzw. festgelegten Bremsdruck/Maximal-Druck. Im Fall, dass der Bremssensor eine zu geringen Bremsung/Verzögerung und/oder eine etwas stärkere Beladung bzw. Vollladung, d.h. bei erhöhtem Gewicht, erfasst/ermittelt, wird in vorteilhafter Weise über das Sensor-Stellglied der Bremsdruck etwas angepasst bzw. erhöht. Hierbei wird das Druckbegrenzungsventil entsprechend hydraulisch umgangen bzw. durch das Sensor-Stellglied hydraulisch kurzgeschlossen. So kann in vorteilhafter Weise ein höherer Bremsdruck als der Maximal-Druck des Druckbegrenzungsventils am Bremselement bzw. für die Bremseinheit zur Verfügung gestellt werden.

Vorzugsweise ist der Maximal-Druck des Druckbegrenzungsventils als Leer-Beladungsdruck bei unbeladenem Arbeitswerkzeug und/oder Arbeitsmaschine ausgebildet. Dies stellt eine vollkommene Abkehr der bisherigen Praxis dar, wobei nämlich der Maximal-Druck des Druckbegrenzungsventils als Voll-Beladungsdruck bei vollbeladenem bzw. maximal beladenem Arbeitswerkzeug und/oder Arbeitsmaschine ausgebildet wurde.

In einer vorteilhaften Ausführungsform der Erfindung weist das Sensor-Stellglied, insbesondere das Bremsdruckventil, einen maximalen Arbeitsdruck der Bremsflüssigkeit auf, wobei der maximale Arbeitsdruck des Sensor-Stellgliedes größer als der Maximal-Druck des Druckbegrenzungsventils ist. Hiermit wird in vorteilhafter Weise erreicht, dass bei Volllast bzw. vollbeladenem Fahrzeug/Arbeitswerkzeug keine zu starke Bremsung bzw. zu große Verzögerung erfolgt, die die Arbeitsmaschine ggf. umkippen lässt.

Das Sensor-Stellglied kann einen festgelegten zweiten Maximal-Druck mit einem bestimmten/definierten Betrag aufweisen. Allerdings kann das Sensor-Stellglied, insbesondere das Bremsdruckventil, keine Druckbegrenzung aufweisen bzw. der zweite Maximal-Druck des Sensor-Stellglieds geht gegen unendlich bzw. ist nicht festgelegt. Hierdurch kann sich der konstruktive und/oder steuerungstechnische Aufwand reduzieren.

Vorzugsweise kontrolliert/steuert/regelt und/oder generiert die Kontrolleinheit eine Schaltzeit und/oder Öffnungszeit und/oder Schalt-/ Öffnungszyklen des Sensor-Stellgliedes. Hierdurch kann das Sensor-Stellglied beispielsweise kurzfristig geöffnet werden, so dass sich kurzfristig bzw. jeweils bei geöffnetem Sensor-Stellglied ein etwas erhöhter Bremsdruck am Bremselement und/oder der Bremseinheit einstellt. Vorteilhafterweise wird eine zyklische Betätigung bzw. Öffnung des Sensor-Stellglieds verwirklicht. So lässt sich der resultierende Bremsdruck ggf. stufenweise bzw. iterativ/allmählich an die Ist-Situation bzw. den Beladungszustand und/oder andere Bremsrahmenbedingungen anpassen. Zum Beispiel wird ein Maximal-Druck am Druckbegrenzungsventil festgelegt/eingestellt und das Sensor-Stellglied wird in Abhängigkeit der Ist-Beladung und/oder der Ist-Verzögerung/-Beschleunigung, d.h. in Abhängigkeit des Sensorsignals/Bremssensors, geöffnet, insb. zyklisch und/oder mehrfach und/oder kurzzeitig, d.h. wenige Millisekunden, und wieder geschlossen. Hiermit kann eine stufenweise bzw. allmähliche Anpassung der Bremsung an die tatsächliche Beladung bzw. das Ist-Gewicht und/oder die Ist-Beschleunigung/ -Verzögerung verwirklicht werden. Dies kann so lange und/oder so oft wiederholt bzw. vorgesehen werden, bis sich die Ist-Verzögerung und/oder bis sich nach vorgegebenen/vorhandenen Erfahrungswerten bzw. zuvor ermittelten empirischen Werten in Abhängigkeit der Beladung bzw. des Gewichtes eine passende Bremsung/Verzögerung einstellt bzw. verwirklicht wird.

Zum Beispiel kann vorab empirisch bzw. mittels Experimenten ermittelt und in einer Datenbank bzw. einem elektr. Speicher oder dergleichen hinterlegt worden sein, dass bei Volllast mit maximaler Beladung ggf. 100 Zyklen mit jeweils einer Länge von z.B. 100 Millisekunden eine Bremsverzögerung eines entspr. Dumpers erreicht wird, die der des Leergewichtes entspricht. Ggf. sind die Zusammenhänge im Wesentlichen proportional, so dass dann bei halber Beladung möglicherweise 50 Zyklen mit jeweils einer Länge von z.B. 100 Millisekunden ausreichend bzw. passend wären.

Generell ist von Vorteil, dass gemäß der Erfindung eine Erkennung des aktuellen Beladungszustandes respektive die Begrenzung der maximalen Vollverzögerung unter Einbeziehung des Maschinengewichts verwirklicht werden kann. Das bedeutet, dass eine Erkennung des Beladungszustandes und eine Anpassung der maximalen Bremskraft umsetzbar sind. Hierdurch wird die Maschine in allen Beladungszuständen deutlich standsicherer.

In einer besonderen Ausführungsform der Erfindung ermittelt beispielweise ein vorteilhafter Beschleunigungssensor den aktuellen Verzögungszustand bzw. die Ist-Beschleunigung der Arbeitsmaschine. Zum Beispiel wird die auf eine Testmasse wirkende Trägheitskraft bestimmt/ermittelt. Somit kann z.B. bestimmt werden, ob eine Geschwindigkeitszunahme oder -abnahme stattfindet. Der Beschleunigungssensor kann als eine inertiale Messeinheit (englisch inertial measurement unit, IMU) ausgebildet werden. Diese ist meist eine räumliche Kombination mehrerer Inertialsensoren wie Beschleunigungssensoren und Drehratensensoren und sie ist bereits handelsüblich und somit kostengünstig einsetzbar und ggf. nachrüstbar. Auch können Beschleunigungssensoren verwendet werden, wie z.B. Gyrometer und/oder miniaturisierte Beschleunigungssensoren wie sog. mikroelektro-mechanische Systeme (MEMS) und/oder Dehnungsmessstreifen, wobei die Verformung einer Befestigung mittels Dehnungsmessstreifen bestimmt wird, und/oder eine magnetische Induktion, wobei durch die Bewegung der an einer Feder aufgehängten Testmasse und durch einen Magneten in einer Spule eine elektrische Spannung induziert wird, und/oder ein Ferraris-Sensor, der die Relativbeschleunigung ohne Testmasse mit Hilfe von Wirbelströmen misst.

Die Verzögerung/Beschleunigung gemäß der Erfindung wird ggf. in einem Controller oder dergleichen über eine Algorithmus ausgewertet und steuert in vorteilhafter Weise ein elektronisch verstellbares Stellglied/Druckregelventil oder dergleichen an.

Im Fall einer Überschreitung einer insb. parametrierbaren Verzögerungsgrenze, regelt in vorteilhafter Weise das Stellglied/Ventil den aktuell zulässigen Bremsdruck ab, sodass die Maschine immer im stabilen Bremszustand bleibt. Hierbei werden neben der Zuladung auch Störgrößen wie Reifenluftdruck, hydrostatische Bremsverzögerung oder auch Motorstützmoment etc. in vorteilhafter Weise mitbewertet bzw. einbezogen.

Eine weitere vorteilhafte Variante der Erfindung ist, die Zuladung bzw. Gewichtskraft/Gewicht zu erkennen, z.B. mittels wenigstens einem Druckaufnehmer, Dehnmessstreifen (DMS) oder Ähnlichem. So kann als Eingangssignal für den Algorithmus in vorteilhafter Weise der Bremsdruck gesteuert bzw. heruntergesetzt werden.

### Ausführungsbeispiel

Ein Ausführungsbeispiel der Erfindung ist in der Zeichnung dargestellt und wird anhand der Figuren nachfolgend näher erläutert.

Im Einzelnen zeigt:
- Figur 1: eine schematische Darstellung einer mobilen Arbeitsmaschine, insbesondere eines Dumpers, einerseits mit einem hydraulischen Sensor und andererseits mit einem elektronischen Sensor gemäß der Erfindung,
- Figur 2: eine schematische Darstellung eines ersten Bremssystems der mobilen Arbeitsmaschine, insbesondere des Dumpers, gemäß Figur 1 mit zwei, hydraulisch in Reihe verschalteten Ventilen,
- Figur 3: eine schematische Darstellung eines zweiten Bremssystems der mobilen Arbeitsmaschine, insbesondere des Dumpers, gemäß Figur 1 mit zwei, hydraulisch parallel verschalteten Ventilen und
- Figur 4: schematische Schaubilder des zweiten Bremssystems der mobilen Arbeitsmaschine, insbesondere des Dumpers, gemäß Figur 3.

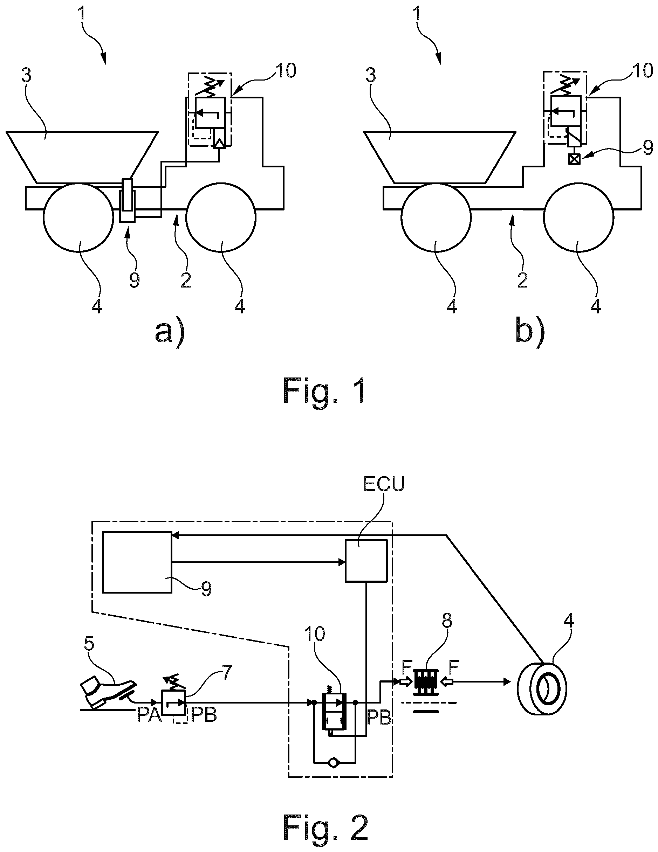

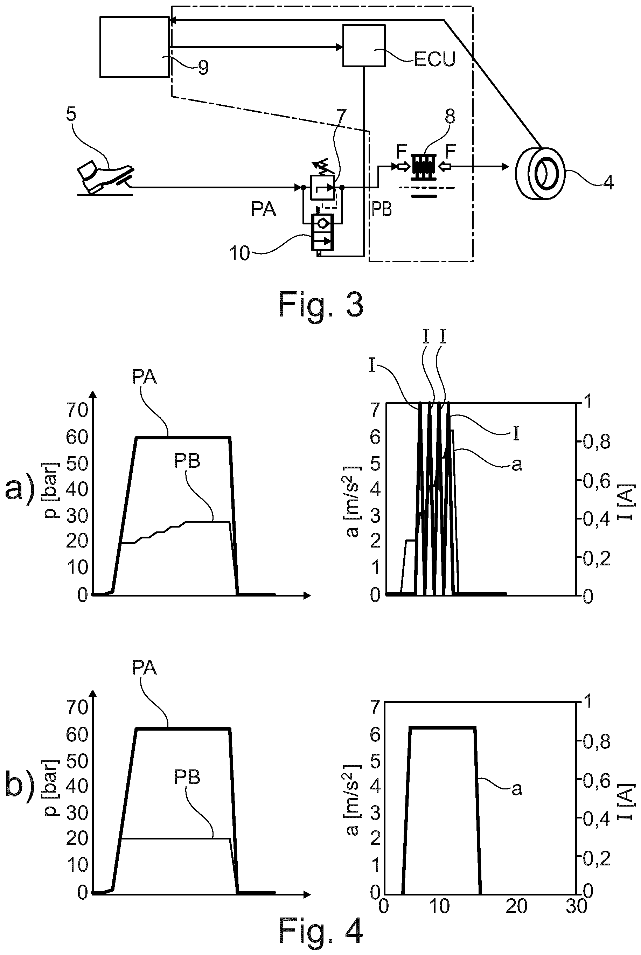

In Figur 1 ist ein Ausführungsbeispiel einer mobilen Arbeitsmaschine 1 bzw. eines Dumpers 1 mit Knicklenkung schematisch dargestellt. Der Dumper 1 umfasst einen Fahrzeugrahmen 2, eine Mulde 3 und eine nicht näher dargestellte hydraulische Hubvorrichtung zum Heben und Senken der Mulde 3 sowie Laufräder 4. Wenigstens eines der Laufräder 4 und/oder eine Achse der Laufräder 4 und somit wiederum die Laufräder 4 kann mittels einer nicht näher dargestellten Bremseinheit gebremst werden. Bei derartigen Dumpern 1 bzw. kleineren Nutzfahrzeugen mit einem Gewicht unter 20t Gesamtgewicht handelt es sich beim Bremssystem meist um eine sog. Fußkraftbremse, wobei die Kraft direkt vom Fahrer bzw. dessen Fuß 5 aufgebracht wird (vgl. Figuren 2, 3). So handelt es sich üblicherweise um ein hydraulisches System, wobei ein Hydraulikpedaldruck bzw. Bremspedaldruck PA, z.B. 60bar, von einem Bremspedal 6 generiert und über Hydraulikleitungen sowie über einem Druckbegrenzungsventil 7 zu einem Bremselement 8 der Bremseinheit geleitet wird. Das Druckbegrenzungsventil 7 regelt/kontrolliert den Hydraulikpedaldruck PA auf einen vorgegebenen Wert bzw. Bremsdruck PB, z.B. 20bar (vgl. Figuren 3 oder 4).

Gemäß der Erfindung ist ein Bremssensor 9 vorgesehen, der z.B. gemäß der Variante der Figur 1a) als hydraulischer Sensor 9 oder gemäß der Variante der Figur 1b) als elektronischer Sensor 9 ausgebildet werden kann. Der Sensor 9 kontrolliert bzw. steuert ein Stellglied 10, z.B. über eine Hydraulik-Verbindung oder über eine elektrische/elektronische Kontrolleinheit bzw. Steuergerät bzw. ECU.

Dieses Stellglied 10 kann hydraulisch einerseits in Serie bzw. Reihe (vgl. Figur 2) und andererseits parallel (vgl. Figur 3) zu/mit dem Druckbegrenzungsventil 7 verschaltet werden. Bei dem Stellglied 10, das gemäß Figur 2 in Serie bzw. Reihe verschaltet bzw. angeordnet ist, wird der begrenzte Bremsdruck PB dem Stellglied 10 zugeführt, das je nach Sensorsignal bzw. durch die ECU gesteuert/kontrolliert wird, d.h. geöffnet oder geschlossen wird. Hierdurch wird der Bremsdruck PB an das Bremselement 8 weitergleitet oder nicht. Bei geschlossenem Stellglied 10 erfolgt keine Bremsung bzw. Betätigung des Bremselementes 8 und somit kein Bremsen des Laufrades 4 bzw. dessen Achse. Folglich schneidet das Stellglied 10 den Bremsdruck bei Bedarf ab, um eine zu starke Verzögerung und somit ggf. ein Kippen des Dumpers 1 zu verhindern.

Gerade bei einer Variante wie in Figur 2 beispielhaft dargestellt, kann ein zyklisches Öffnen und Schließen des Stellgliedes 10 ein quasi konstantes Bremsmoment verwirklichen. Hierbei kann in vorteilhafter weise ein Beschleunigungssensor 9, z.B. ein IMU, als Bremssensor 9 verwendet werden.

Bei der zweiten Variante gemäß Figur 3 sind die beiden Ventile 7, 10 bzw. Druckbegrenzungsventil 7 und Stellglied 10 hydraulisch parallel verschaltet/angeordnet. Hier schneidet das Stellglied 10 nicht den Bremsdruck PA bzw. PB ab, sondern es ermöglicht eine Umgehung bzw. einen Bypass der Druckbegrenzung durch das Druckbegrenzungsventil 7. Somit wird hier eine Bremsdruckerhöhung realisierbar. In Figur 4b) ist diese Situation für die Schaltung gemäß Figur 3 bei Leergewicht bzw. leerem Dumper 1 bzw. leerer Mulde 3 schematisch dargestellt. Der Bremspedaldruck PA ist z.B. 60bar, jedoch der Bremsdruck PB ist/soll nur 20bar sein, so dass der Dumper 1 in vorteilhafter Weise gebremst wird, d.h. nicht zu stark abgebremst wird. Die Verzögerung bzw. negative Beschleunigung a beträgt z.B. ca. 6 Meter pro Quadratsekunde. Das Stellglied 10 bleibt geschlossen bzw. erhält keinen Stromimpuls von der ECU, da der Sensor 9 ein entspr. Sensorsignal der ECU zuleitet, dass die Beschleunigung a angemessen ist bzw. die Mulde 3 leer ist.

Im Fall eines beladenen Dumpers 1 mit (voll-)beladener Mulde 3 würde dies nicht ausreichen, um eine angemessene Verzögerung zu erreichen. Deshalb wird gemäß Figur 4a) eine Bremsdruckerhöhung des Bremsdruckes PB realisiert, z.B. in vier Stufen erhöht. Deutlich wird in Figur 4a), dass sich der Bremsdruck PB von anfangs ca. 20bar auf ca. 28bar erhöht hat. Hierfür wird das Stellglied 10 gemäß beispielhafter Darstellung mittels vier kurzen Stromimpulsen geöffnet, so dass sich der Bremsdruck PB stufenweise erhöht und zugleich die Verzögerung a stufenweise sich erhöht (vgl. Figur 4a)). So ist hierbei angenommen, dass nach diesen vier Stufen entspr. dem Schaubild die Verzögerung sich von ca. 2 bis zum angestrebten Wert 6 Meter pro Quadratsekunde erhöht hat. Dies kann ggf. bei einem halbbeladenen Dumper 1 bzw. Mulde 3 der Fall sein. Bei vollbeladenem Dumper 1 bzw. Mulde 3 würden dann etwa 8 Stromimpulse bzw. eine 8-stufige Erhöhung der Verzögerung bis zum Wert 6 Meter pro Quadratsekunde notwendig.

## Patentansprüche

1. Mobile Arbeitsmaschine, insbesondere Radlader, Teleskoplader, Bagger, Dumper (1), Traktor oder dergleichen, mit einem Fahrzeugrahmen (2) und mit einer Antriebseinheit zum Antreiben wenigstens eines um eine Antriebsachse drehbaren Antriebslaufrades (4), wobei wenigstens ein Arbeitswerkzeug (3), wie z.B. eine Mulde (3), eine Schaufel, eine Greifschaufel, eine Gabel, ein Kehrbesen, ein Räumschild oder dergleichen, und/oder eine Werkzeughaltevorrichtung zum Halten des Arbeitswerkzeugs (3) vorgesehen ist, wobei wenigstens eine zumindest ein Bremselement (8) aufweisende Bremseinheit zum Bremsen des wenigstens einen Antriebslaufrades (4) vorgesehen ist, wobei die Bremseinheit als wenigstens eine Bremsflüssigkeit umfassende Hydraulik-Bremseinheit ausgebildet ist, wobei wenigstens ein Bremspedal zum manuellen Betätigen von einer Bedienperson (5) und zum Druckbeaufschlagen der Bremsflüssigkeit vorgesehen ist, wobei die Bremseinheit wenigstens ein Druckbegrenzungsventil (7) zum Begrenzen eines Maximal-Drucks der Bremsflüssigkeit umfasst, **dadurch gekennzeichnet, dass** wenigstens ein Bremssensor (9) zum Erfassen eines Bremsparameters vorgesehen ist und dass der Bremssensor (9) als Gewichtskraftsensor zum Erfassen einer Gewichtskraft und/oder Zuladung des Arbeitswerkzeuges (3) oder als Beschleunigungssensor zum Erfassen einer Bremsbeschleunigung der Arbeitsmaschine (1) ausgebildet ist.

2. Arbeitsmaschine nach Anspruch 1, **dadurch gekennzeichnet, dass** der Bremssensor (9) zum Kontrollieren/Steuern/Regeln eines Sensor-Stellgliedes (10), insbesondere eines Bremsdruckventils, ausgebildet ist.

3. Arbeitsmaschine nach einem der vorgenannten Ansprüche, **dadurch gekennzeichnet, dass** der Bremssensor (9) als Hydraulik-Bremssensor zum hydraulischen Erfassen des Bremsparameters und/oder hydraulischen Kontrollieren/Steuern/Regeln des Sensor-Stellgliedes (10) ausgebildet ist.

4. Arbeitsmaschine nach einem der vorgenannten Ansprüche, **dadurch gekennzeichnet, dass** der Bremssensor (9) als elektrischer und/oder elektronischer Bremssensor zum elektrischen/elektronischen Erfassen des Bremsparameters und/oder elektrischen/elektronischen Kontrollieren/Steuern/Regeln des Sensor-Stellgliedes (10) ausgebildet ist.

5. Arbeitsmaschine nach einem der vorgenannten Ansprüche, **dadurch gekennzeichnet, dass** wenigstens eine elektrische und/oder elektronische Kontrolleinheit (ECU) zum elektrischen/elektronischen Kontrollieren/Steuern/Regeln des Sensor-Stellgliedes (10), insbesondere des Bremsdruckventils, vorgesehen ist.

6. Arbeitsmaschine nach einem der vorgenannten Ansprüche, **dadurch gekennzeichnet, dass** das Druckbegrenzungsventil (7) und das Sensor-Stellglied (10) hydraulisch in Serie verschaltet/angeordnet sind.

7. Arbeitsmaschine nach einem der vorgenannten Ansprüche, **dadurch gekennzeichnet, dass** das Druckbegrenzungsventil (7) und das Sensor-Stellglied (10) hydraulisch parallel verschaltet/angeordnet sind.

8. Arbeitsmaschine nach einem der vorgenannten Ansprüche, **dadurch gekennzeichnet, dass** der Maximal-Druck des Druckbegrenzungsventils (7) als Leer-Beladungsdruck bei unbeladenem Arbeitswerkzeug (3) und/oder Arbeitsmaschine (1) ausgebildet ist.

9. Arbeitsmaschine nach einem der vorgenannten Ansprüche, **dadurch gekennzeichnet, dass** das Sensor-Stellglied (10), insbesondere das Bremsdruckventil, einen maximalen Arbeitsdruck der Bremsflüssigkeit aufweist, wobei der maximale Arbeitsdruck des Sensor-Stellgliedes (10) größer als der Maximal-Druck des Druckbegrenzungsventils (7) ist.

10. Arbeitsmaschine nach einem der vorgenannten Ansprüche, **dadurch gekennzeichnet, dass** das Sensor-Stellglied (10), insbesondere das Bremsdruckventil, keine Druckbegrenzung aufweist.

11. Arbeitsmaschine nach einem der vorgenannten Ansprüche, **dadurch gekennzeichnet, dass** die Kontrolleinheit (ECU) eine Schaltzeit und/oder Öffnungszeit und/oder Schalt-/ Öffnungszyklen des Sensor-Stellgliedes (10) kontrolliert/steuert/regelt.
